# EUROPÄISCHE PATENTSCHRIFT

(11) **EP 1 650 519 B1**
(45) Veröffentlichungstag und Bekanntmachung des Hinweises auf die Patenterteilung: **20.11.2019**
(21) Anmeldenummer: 05017522.3
(22) Anmeldetag: 11.08.2005
(51) Int. Cl.: F27D 19/00, F27B 17/02, A61C 13/20, G01K 15/00, G05D 23/22, F27D 21/00

(54) **Brennofen mit Kalibriervorrichtung**
Baking furnace with calibrating device
Four de cuisson avec dispositif de calibration

(30) Priorität: 21.10.2004 DE 102004051409
(43) Veröffentlichungstag der Anmeldung: 26.04.2006
(73) Patentinhaber: Ivoclar Vivadent AG, 9494 Schaan (LI)
(72) Erfinder: Jussel Rudolf, A-6800 Feldkirch-Tosters (AT); Feichtinger, Heinrich, CH-8132 Hinteregg (CH)
(74) Vertreter: Baronetzky, Klaus

(56) Entgegenhaltungen:
- EP-A- 1 452 843
- DE-A1- 2 758 084
- DE-A1- 4 206 540
- DE-A1- 10 008 603

## Beschreibung

Die Erfindung betrifft einen Brennofen, gemäß dem Oberbegriff von Anspruch 1.

Derartige Brennöfen sind seit längerem bekannt. Es ist wichtig, dass Brennöfen beispielsweise für Dentalkeramiken kalibriert werden, da das erzielbare Restaurationsergebnis in starkem Maße davon abhängt, inwiefern die gemäß dem betreffenden Brennprogramm abgefahrene Temperaturkurve tatsächlich eingehalten wird. In der Praxis kann bei fehlerhafter Kalibrierung durchaus ein Temperaturfehler von 10°C entstehen, der eindeutig nicht mehr akzeptabel ist.

Aus der Druckschrift EP 1 452 843 A1 ist ein Ofen mit Kalibriervorrichtung in allgemeiner Form bekannt. Eichbare Thermoelemente sind an sich bekannt, beispielsweise aus der DE 27 58 084 A1.

Für die Kalibrierung von Brennöfen werden seit langer Zeit sogenannte Silberschmelzproben eingesetzt. Silber schmilzt typischerweise exakt bei der Temperatur von 961,3°C. Bei der manuellen Silberschmelzprobe wird ein Halter für einen waagerecht angeordneten und einseitig angespannten Silberdraht in den Brennofen zentral eingesetzt. Das Schmelzen des Silberdrahts führt zum Absenken der waagerechten Position des Silberdrahts und erfolgt genau bei diesem Temperaturpunkt. Der Zahntechniker, der den Brennofen nachkalibriert, stellt nun den Brennofen so ein, dass bei diesem Temperaturpunkt, der Referenztemperatur, der Brennofen genau 961,3°C anzeigt.

Bei größeren Abweichungen ist allerdings eine Nachkalibrierung durch Wiederholen der manuellen Kalibrierung erforderlich. Zudem ist das Verfahren zwar recht einfach, jedoch eher fehlerbehaftet. Beispielsweise darf die Silberprobe nicht etwa auf einem Wabenträger abgestellt werden, da dies das Messergebnis verfälschen würde. Auch muss die Silberprobe exakt in der Mitte des Ofensockels positioniert werden, um eine zuverlässige Referenz zu ermöglichen. Schließlich ist auch der Schmelzbeginn von der subjektiven Beobachtung durch den Zahntechniker abhängig. Ferner ist es auch wichtig, dass die Kalibrierung nicht unmittelbar nach einem Brennvorgang oder bei kaltem Brennofen vorgenommen wird, da im ersten Fall die Ausgangstemperatur zu hoch und im zweiten Fall die Ausgangstemperatur zu niedrig wäre.

Aufgrund dieser Nachteile ist es seit längerem bekannt geworden, die Kalibrierung eines Ofens zu automatisieren. So ist aus der DE 42 18 032 A1 ein Ofen zur Durchführung von Thermoanalysen bekannt, bei dem die Temperatur des Ofenträgers über Thermoelemente gemessen werden kann. Die Anschlussdrähte der Thermoelemente sind nach außen geführt.

Ferner ist aus der DE-OS 42 06 540 die Verwendung eines Referenztemperaturelements bekannt. Durch eine elektronische Auswertschaltung lässt sich die tatsächliche Temperatur erfassen, und es wird eine Eigenkalibrierung angestrebt. Diese Lösung ist jedoch recht aufwändig und insbesondere von der Genauigkeit der Auswertung abhängig. Es wird praktisch basierend auf der Schmelztemperatur von Zinn (231°C) ein Korrektursignal abgeleitet, das das dortige Thermoelement permanent korrigieren soll. Insofern erfolgt keine eigenständige Kalibrierung, sondern eine stete Nachjustierung während des Messens.

Ferner sind auch halbautomatische Kalibriermethoden bekannt geworden. Beispielsweise ist bei dem Brennofen der Anmelderin, der unter der Bezeichnung PX1 bekannt ist, die Kalibrierung so weit verbessert, dass keine Nachkalibration erforderlich ist. Schließlich wird bei dem Kalibrationsprogramm des Brennofens EP 600 der vorliegenden Anmelderin eine automatische Temperatursteuerung vorgenommen, so dass beispielsweise die Ausgangstemperatur, die für den Kalibriervorgang wichtig ist, gegebenenfalls nach Realisierung einer Wartezeit, vorgegeben ist, und das Kalibrierergebnis verbessert.

Andererseits wäre die Genauigkeit der Temperaturmessung bei sämtlichen bekannten Kalibrierverfahren verbesserungswürdig. Daher wird nach wie vor in verschiedenen Fällen empfohlen, den kompletten Brennofen im Werk nachkalibrieren zu lassen, was allerdings einen entsprechenden Aufwand für die Übersendung, aber auch für den Ausfall im Zahntechniklabor während der Kalibrierung im Werk und der Transportzeit bedeutet.

Ein weiteres Problem liegt in der Abweichung des tatsächlich von dem Brennofen realisierten Temperaturprofils von den tatsächlich einzuhaltenden Temperaturen begründet. Um diesen Nachteil zu kompensieren, ist es aus der DE 100 08 603 C2 bekannt geworden, zwei Referenztemperaturen zu verwenden, nämlich den Schmelzpunkt von Gold (1.064,67°C) und von Silber (961,3°C). Zwar lässt sich hierdurch nicht nur ein reiner Offset, sondern auch eine Neigung der Fehlerkurve berücksichtigen. Jedoch erfordert die dort vorgenommene Realisierung mit zwei Schmelzdrähten ein recht aufwändiges Verfahren, zumal auf Grund der unterschiedlichen verwendeten Materialien auch vermieden werden muss, dass Verunreinigungen entstehen.

Verunreinigungen an der regelmäßig für die Temperatursteuerung des Ofens verwendeten Temperaturerfassungselements, das auch als Regelthermoelement bezeichnet wird, führen andererseits auch zu Temperaturabweichungen. Durch Dämpfe, die von dem Brenngut abgegeben werden, kann das Temperaturerfassungselement vergiftet werden, so dass sich eine Temperaturabweichung ergibt. Dies erfordert dann ein besonders sorgfältiges Nachkalibrieren, wenn der recht aufwändige Austausch dieses Regelthermoelements vermieden werden soll.

Daher liegt der Erfindung die Aufgabe zu Grunde, einen Brennofen gemäß dem Oberbegriff von Anspruch 1 zu schaffen, der eine stärkere Unabhängigkeit von nachteiligen Einflüssen des Betriebs auf die Temperaturgenauigkeit hat, wobei dennoch mit vergleichsweise geringem Aufwand ein verlässlicher und fehlerunanfälliger Kalibrierungsschritt möglich sein soll.

Diese Aufgabe wird erfindungsgemäß durch Anspruch 1 gelöst. Vorteilhafte Weiterbildungen ergeben sich aus den Unteransprüchen. Der erfindungsgemäße Brennofen zeichnet sich durch einen besonderen Temperaturfühler in der Kalibriervorrichtung aus. Der Temperaturfühler erlaubt die Kalibrierung des Temperaturerfassungs - elements über den gesamten Messbereich, also nicht nur an einem oder zwei Temperaturpunkten. Erfindungsgemäß wird der Temperaturfühler selbst jedoch an einer diskreten Anzahl von Temperaturpunkten, wie beispielsweise an zwei Temperaturpunkten, geeicht. Bevorzugt ist er jedoch von ausreichender Linearität, zumal er in vorteilhafter Ausgestaltung im Betrieb nicht permanent Dämpfen durch erhitztes Brenngut usw. ausgesetzt ist. Der Temperaturfühler vermag daher wesentlich genauer als bei den bislang bekannten Lösungen für die Kalibrierung des Temperaturerfassungselements eingesetzt werden, beispielsweise auch bei Temperaturen, die sich von den Schmelztemperaturen von Silber und Gold deutlich unterscheiden.

Erfindungsgemäß ist es insofern günstig, dass der erfindungsgemäße Temperaturfühler bereits ein exaktes Temperaturprofil als Referenz bereitstellt, nachdem er selbst geeicht ist. Die Eichung des Temperaturfühlers kann im Grunde im Sinne einer Nacheichung während der Kalibrierung erfolgen, es ist aber bevorzugt, dass der Temperatufühler vorab geeicht wird und in dem Kalibrierschritt lediglich eine Anpassung des Temperaturprofils des Brennofens an das Soll-Temperaturprofil vorgenommen wird.

Erfindungsgemäß ist es besonders günstig, wenn die Latenzwärme beim Schmelzen eines Referenzmaterials für die Temperaturerfassung herangezogen wird. Hierzu wird die Masse des Materials ausgenutzt und durch die Aufheizung durch eine Messelektronik festgestellt, wenn sich ein Temperaturplateau trotz gleichbleibend zugeführter Heizenergie einstellt. Dieses Temperaturplateau entspricht exakt der Schmelztemperatur, da die Schmelzwärme oder Latenzwärme genau beim Schmelzpunkt des Materials auftritt.

Diese erfindungsgemäße Maßnahme ermöglich es erstmals, anstelle von "verlorenen" Referenzmaterialien auf wiederverwendbare Referenzmaterialien zurückzugreifen. Auch kann ebenfalls Material in einem nahezu oder vollständig geschlossenen Raum in der Kalibriervorrichtung aufgenommen sein, so dass Verunreinigungen durch Einwirkungen von außen auf das Referenzmaterial nicht zu befürchten sind.

Während erfindungsgemäß die Aufheizung als Referenz-Temperaturprofil eingesetzt wird, versteht es sich, dass die gleiche Neigung des Temperaturprofils, beim Schmelzpunkt des Referenzmaterials zu verharren, ebenfalls als Referenz-Temperaturpunkt ausgenutzt werden kann.

Es ist in vorteilhafter Ausgestaltung auch beispielsweise möglich, drei kleine Schmelztiegel, die zum Beispiel je mit Aluminium, Silber und Gold gefüllt sind, als Referenzmaterialien einzusetzen und hierdurch drei Temperaturpunkte für die Eichung der Kalibriervorrichtung selbst einzusetzen.

Auch wenn ein Festeinbau der erfindungsgemäßen Kalibriervorrichtung in einen Brennofen ohne Weiteres möglich ist, versteht es sich, dass in größeren Dentallaboren auch mit lediglich einer erfindungsgemäßen Kalibriervorrichtung ausgekommen werden kann, mit welcher dann nacheinander die verschiedenen Brennöfen kalibrierbar sind. Erfindungsgemäß seien hier unter Brennöfen sowohl druckfreie als auch sogenannte Pressöfen zu verstehen, Brennöfen also, bei denen während des Brands unter Druck auf die Dentalkeramik ausgeübt wird. Erfindungsgemäß besonders günstig ist es, dass das Temperaturprofil des erfindungsgemäßen Temperaturfühlers - nach seiner Eichung - unabhängig von dem Druck im Innenraum des Brennofens festliegt, so dass auch unter Druck eine Abgleichung des Ist-Temperaturprofils an das Soll-Temperaturprofil erfolgen kann und insofern ein noch genauerer Abgleich möglich ist.

Gemäß einer vorteilhaften Ausgestaltung des erfindungsgemäßen Brennofens ist es vorgesehen, dass mindestens einer der Temperaturpunkte ein Schmelzpunkt eines im Wesentlichen reinen Materials, insbesondere Metalls, ist und dass die Latenzwärme des Materials für die Temperaturerfassung ausgenutzt wird.

Gemäß einer vorteilhaften Ausgestaltung des erfindungsgemäßen Brennofens ist es vorgesehen, dass der Temperaturfühler in Anlage, insbesondere in großflächigem Kontakt, mit einem Material ist, das beim Erreichen eines Temperaturpunkts seinen Aggregatzustand ändert.

Gemäß einer vorteilhaften Ausgestaltung des erfindungsgemäßen Brennofens ist es vorgesehen, dass das Material, insbesondere Silber, in einer Ausnehmung in dem Temperaturfühler aufgenommen ist.

Gemäß einer vorteilhaften Ausgestaltung des erfindungsgemäßen Brennofens ist es vorgesehen, dass die Temperatur eines Materials, bei der es seinen Aggregatzustand ändert, insbesondere von Silber bei 961,3°C, als Eich-Temperaturpunkt vorgegeben ist.

Gemäß einer vorteilhaften Ausgestaltung des erfindungsgemäßen Brennofens ist es vorgesehen, dass das Material, das bei einem Temperaturpunkt seinen Aggregatzustand ändert, in einer Masse vorgesehen ist, die mindestens 10 %, insbesondere mindestens 30 %, und bevorzugt näherungsweise die Hälfte, der Masse des Temperaturfühlers ausmacht.

Gemäß einer vorteilhaften Ausgestaltung des erfindungsgemäßen Brennofens ist es vorgesehen, dass der Brennofen eine Ofenhaube und einen Ofensockel aufweist und die Kalibriervorrichtung mit dem Temperaturfühler etwa zentral in der Mitte, insbesondere auf dem Ofenfühler, angeordnet und von dort entnehmbar ist.

Gemäß einer vorteilhaften Ausgestaltung des erfindungsgemäßen Brennofens ist es vorgesehen, dass das Temperaturerfassungselement in einer Ofenhaube, insbesondere im oberen Bereich eines Brennraums, angeordnet ist.

Gemäß einer vorteilhaften Ausgestaltung des erfindungsgemäßen Brennofens ist es vorgesehen, dass das Temperaturerfassungselement in einem Brennraum des Ofens oberhalb der Kalibriervorrichtung angeordnet ist.

Weiter ist es vorgesehen, dass eine automatische Abgleichvorrichtung in dem Brennofen vorgesehen ist, mit welcher die Kalibriervorrichtung das Temperaturerfassungselement bei einer Vielzahl von Temperaturen abgleicht.

Gemäß einer vorteilhaften Ausgestaltung des erfindungsgemäßen Brennofens ist es vorgesehen, dass der Temperaturfühler durch die Eichung über die vorgegebene Anzahl von Temperaturpunkten einen Offset erfährt, der bis zur nächsten Eichung abspeicherbar ist.

Gemäß einer vorteilhaften Ausgestaltung des erfindungsgemäßen Brennofens ist es vorgesehen, dass die Kalibriervorrichtung für das Temperaturerfassungselement zu ihrer Eichung ein vorgegebenes Temperaturprofil abgespeichert hat und dass die Kalibrierung über die Kalibriervorrichtung unter Abfahren eines DIN-Temperaturprofils, einmal mit Unterdruck und einmal ohne Unterdruck, erfolgt.

Gemäß einer vorteilhaften Ausgestaltung des erfindungsgemäßen Brennofens ist es vorgesehen, dass die Kalibriervorrichtung in den Brennofen fest eingebaut ist, insbesondere im Bereich des Ofensockels.

Gemäß einer vorteilhaften Ausgestaltung des erfindungsgemäßen Brennofens ist es vorgesehen, dass die Kalibriervorrichtung steckbar an dem Brennofen angebracht ist und nach dem Einstecken in den Brennraum ragt.

Gemäß einer vorteilhaften Ausgestaltung des erfindungsgemäßen Brennofens ist es vorgesehen, dass die Kalibriervorrichtung beweglich, insbesondere über einen Schwanenhals, in oder an dem Brennofen gelagert ist.

Gemäß einer vorteilhaften Ausgestaltung des erfindungsgemäßen Brennofens ist es vorgesehen, dass die Kalibriervorrichtung als nachrüstbare Vorrichtung für einen Brennofen ausgebildet ist.

Weitere Einzelheiten, Vorteile und Merkmale ergeben sich aus der nachstehenden Beschreibung zweier Ausführungsbeispiele der Erfindung anhand der Zeichnungen.

Es zeigen:
- Fig. 1: eine schematische Ansicht eines erfindungsgemäßen Brennofens in einer Ausführungsform;
- Fig. 2: eine Ansicht eines erfindungsgemäßen Temperaturfühlers für eine erfindungsgemäße Kalibriervorrichtung für den Brennofen gemäß Fig. 1;
- Fig. 3: die schematische Darstellung eines Temperaturprofils eines Referenzmaterials (Silber);
- Fig. 4: eine modifizierte Ausführungsform eines Temperaturfühlers für den erfindungsgemäßen Brennofen; und
- Fig. 5: das gemessene Temperaturprofil bei gleichbleibender Wärmezufuhr für einen erfingungsgemäßen Temperaturfühler.

Ein erfindungsgemäßer Brennofen 10 weist ein Temperaturerfassungselement 12 auf, das in einer Ofenhaube 14 im oberen Bereich eines Brennraums 16 angebracht ist. Das Temperaturerfassungselement 12 dient als Regel-Thermoelement und regelt die Temperatur des Brennofens im Betrieb. Hierzu ist ein schematisch dargestellter Messverstärker 18 in dem Brennofen vorgesehen, mit dem der Abgleich zwischen Solltemperatur und Isttemperatur gemäß Messung des Temperaturerfassungselements 12 vorgenommen wird.

Die Ofenhaube 14 weist in an sich bekannter Weise ein Heizelement 20 auf und ist von einem Ofensockel 22 abhebbar. Der Ofensockel bietet eine Sockelplatte 24, auf der das Brenngut, beispielsweise in einer Muffe, abstellbar ist, wie es an sich seit langem bekannt ist.

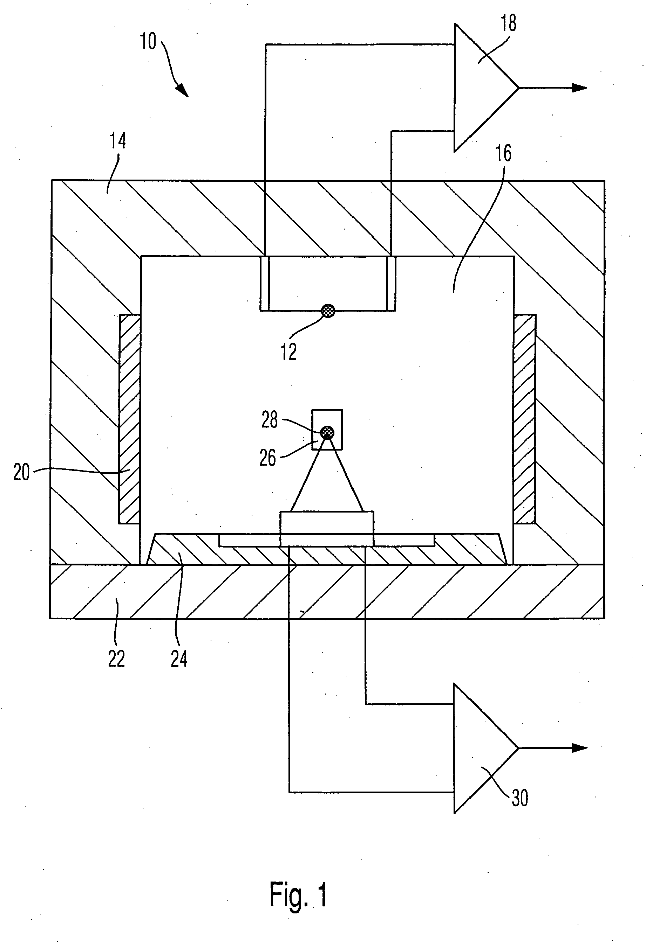

Anstelle der in Fig. 1 dargestellten Anordnung kann das Temperaturerfassungselement 12 auch auf dem Ofensockel 22 oder ihm zumindest benachbart angeordnet sein.

Erfindungsgemäß ist es vorgesehen, dort für die Kalibrierung des Ofens eine Kalibriervorrichtung 26 einzubringen. Die Kalibriervorrichtung 26 weist einen Temperaturfühler 28 auf, der in besonderer Weise ausgebildet ist. Der Temperatufühler 28 ist mit einer Abgleichvorrichtung 30 elektrisch verbunden, die Teil einer Auswerteelektronik ist, mit welcher die Kalibrierung des Temperaturerfassungselements 12 basierend auf den von dem Temperaturfühler 28 gemessenen Temperaturen vorgenommen wird.

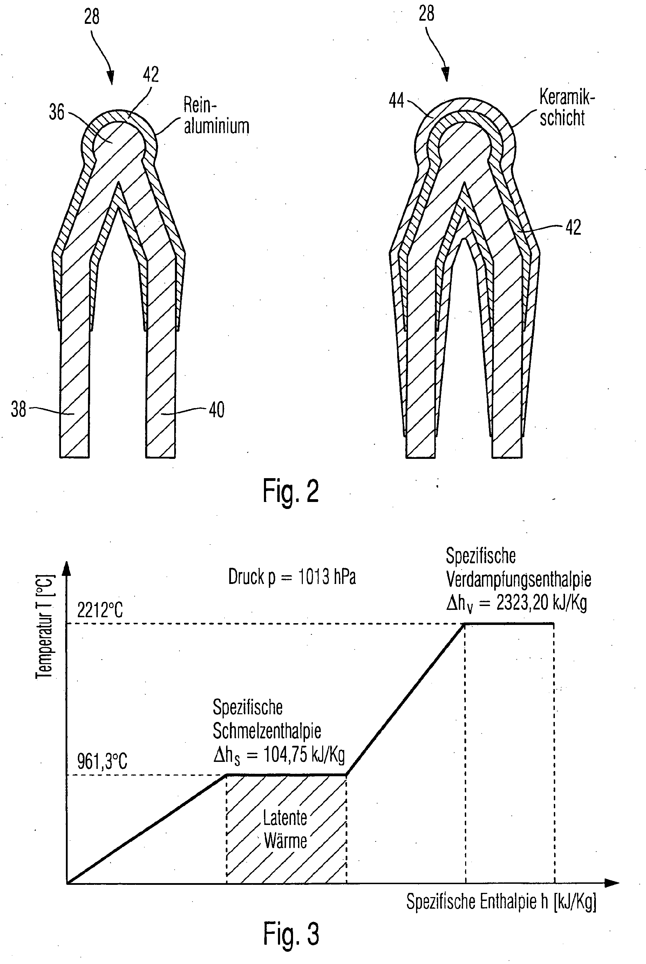

Fig. 2 zeigt zwei Ausführungsformen eines erfindungsgemäßen Temperaturfühlers. In der links dargestellten Ausführungsform weist der Temperaturfühler 28 ein Thermopaar 36 zur Bildung eines Thermoelements auf. Das Thermopaar 36 und der benachbarte Teil der zugehörigen Anschlussdrähte 38 und 40 ist vollständig von Reinaluminium umhüllt, und zwar in einer signifikanten Menge, die beispielsweise auch größer sein kann als die Masse des Thermopaars selbst.

Eine modifizierte Ausgestaltung des erfindungsgemäßen Temperaturfühlers 28 ist in Fig. 2 rechts dargestellt. Dort ist das Reinaluminium 42 als Referenzmaterial von einer Keramikschicht 44 umgeben, die das Referenzmaterial 42 von Umgebungseinflüssen abschirmt. Bevorzugt ist der Raum, den das Referenzmaterial 42 einnimmt, ein geschlossener Raum.

Erfindungsgemäß wird die Schmelzwärme oder Latenzwärme des Referenzmaterials 42 ausgenutzt, um eine Eichung des erfindungsgemäßen Temperaturfühlers vorzunehmen. Das zugrunde liegende Schema ist aus Fig. 3 für Silber als Referenzmaterial ersichtlich. In Fig. 3 ist die Temperatur T über der spezifischen Enthalpie h aufgetragen. Wie ersichtlich ist, nimmt die Temperatur T unterhalb der Schmelztemperatur von 961,3°C bei zugeführter Wärmeenergie zu. Für das Schmelzen des Referenzmaterials 42 muss die Schmelzwärme aufgebracht werden, die bei Silber 104,75 kJ/kg beträgt. Erst nach Abschluss des Schmelzvorgangs steigt bei gleichbleibender Wärmezufuhr die Temperatur weiter an, wie es aus Fig. 3 ersichtlich ist, und zwar bis zum Siedepunkt bei 2.212°C.

Die genannten Temperaturpunkte liegen vor, wenn ein Umgebungsdruck (1.013 hPa) bereitgestellt wird, so dass die Eichung des erfindungsgemäßen Temperaturfühlers bei Umgebungsdruck durchgeführt werden sollte.

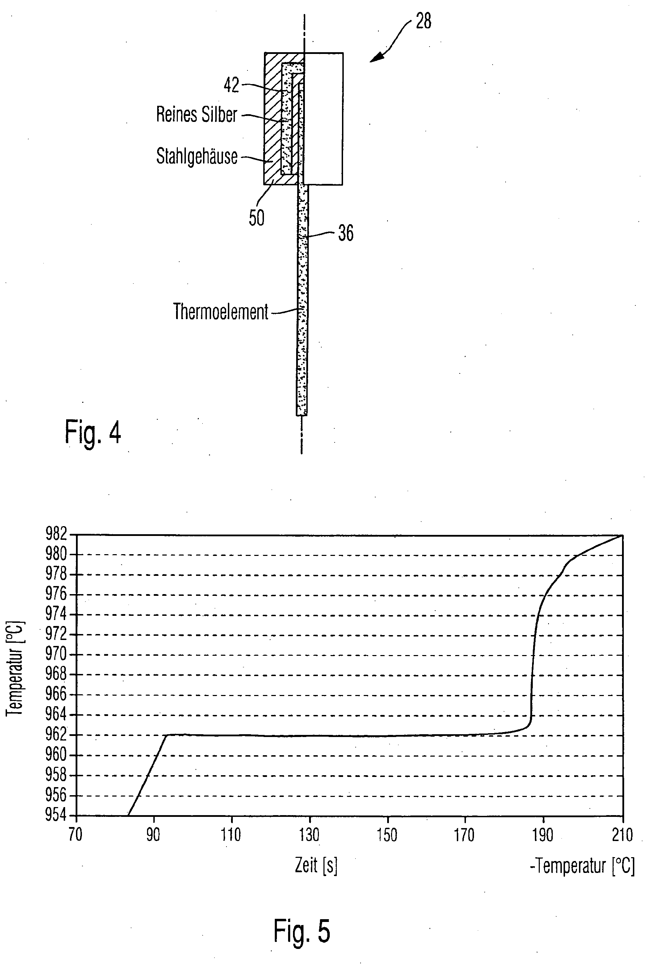

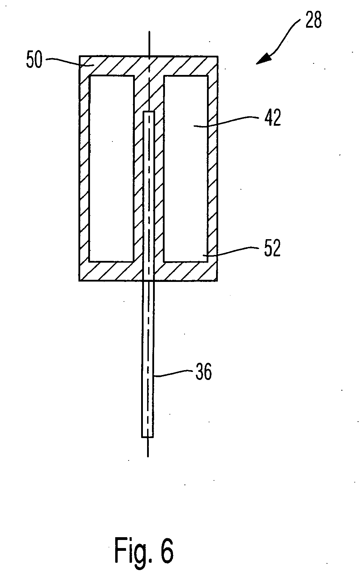

Aus Fig. 4 ist eine modifizierte Ausgestaltung eines erfindungsgemäßen Temperaturfühlers 28 ersichtlich. Dort ist in einem geschlossenen Stahlgehäuse 50 reines Silber als Referenzmaterial 42 aufgenommen. Hierzu weist das Gehäuse eine entsprechend geformte Ausnehmung auf. Das Silber 42 umgibt das dortige Thermoelement 36 becherförmig und eng benachbart, so dass die Schmelzenthalpie sich deutlich auf die Temperaturzunahme des Thermoelements 36 auswirkt.

Diese gekapselte Ausgestaltung des erfindungsgemäßen Temperaturfühlers 28 hat den Vorteil, dass eine vollständige Unabhängigkeit von Umgebungseinflüssen gegeben ist, wobei es sich versteht, dass durch geeignete Maßnahmen sichergestellt sein muss, dass die Volumenzunahme des Referenzmaterials 42 beim Schmelzen nicht zu einer Zerstörung des erfindungsgemäßen Temperaturfühlers 28 führen darf. Dies kann beispielsweise durch eine kleine, mit Stickstoff gefüllte Ausnehmung sichergestellt sein, die ein Ausweichen des Referenzmaterials bei Volumenzunahme dort ermöglicht.

Aus Fig. 5 ist ersichtlich, wie sich die Schmelzenthalpie oder der Einfluss der Latenzwärme bei gleichbleibender Wärmezufuhr während der Eichung des erfindungsgemäßen Temperaturfühlers 28 auswirkt. Das Aufheizen des Brennofens erfolgt zunächst - unterhalb von 960°C - im Wesentlichen linear innerhalb von etwa 90 Sekunden. Während die Wärmezufuhr im weiteren Verlauf der Temperatumessung des Thermoelements 36 nicht etwa eingestellt wird, bleibt die Temperatur zwischen etwa 95 Sekunden und 170 Sekunden, gerechnet vom Beginn des Eichzyklusses, im Wesentlichen konstant. Während dieser Zeit schmilzt das Referenzmaterial 42. Das Referenz-Thermoelement 36 misst jedoch nicht etwa die Innentemperatur des Brennraums - die weiter zunimmt - sondern im Grunde die Temperatur des Referenzmaterials 42. Hierdurch entsteht ein Temperaturplateau bei etwa 962°C bis nach etwa 185 Sekunden das Referenzmaterial 42 vollständig geschmolzen ist. Hier erfolgt dann ein fast abrupter Temperaturanstieg aufgrund der hohen Differenz der Innentemperatur des Thermofühlers 28 und seiner Außentemperatur - das Stahlgehäuse 50 hat sich während dieser Zeit bereits auf einen wesentlich höheren Temperaturwert erwärmt.

Das Erreichen dieses hier beschriebenen Temperaturplateaus wird nun von der Messelektronik erfasst und als Referenztemperatur für die Eichung des Temperaturfühlers 28 verwendet. Mit einem derart abgeglichenen Temperaturfühler wird nun - bevorzugt in einem eigenen Kalibrierzyklus des erfindungsgemäßen Brennofens - das Temperaturerfassungselement 12 abgeglichen, und zwar bei einer Vielzahl von Messpunkten, zwischen dem unteren Ende des Messbereichs und dem oberen Ende des Messbereichs des Temperaturerfassungselements 12.

Während hier die Eichung bei einem Temperaturpunkt und unter Zurverfügungstellung eines Referenzmaterials 42 beschrieben ist, versteht es sich, dass anstelle dessen auch zwei oder mehrere Referenzmaterialien und Temperaturpunkte für die Eichung des erfindungsgemäßen Temperaturfühlers eingesetzt werden können. In dieser Ausführungsform lässt sich nicht nur der Offset des Ist-Temperaturprofils kompensieren, sondern auch die Kurvenneigung des Temperaturprofils, so dass sich die Eichung der Kalibriervorrichtung noch verbessern lässt.

## Patentansprüche

1. Brennofen für Brenngut, insbesondere für Dentalmaterialien, mit einem Temperaturerfassungselement (12) und einer Kalibriervorrichtung (26) für den Brennofen, mit welcher das Temperaturerfassungselement (12) kalibrierbar ist, wobei die Kalibriervorrichtung (26) einen Temperaturfühler (28) aufweist, die Kalibriervorrichtung (26) mit dem Temperaturfühler (28) etwa zentral in der Mitte angeordnet ist und der Temperaturfühler (28) seinerseits bei einer vorgegebenen Anzahl von wenigstens 2 Temperaturpunkten eichbar ist, **dadurch gekennzeichnet, dass**
eine automatische Abgleichvorrichtung (30) in dem Brennofen (10) vorgesehen ist, mit welcher durch die Kalibriervorrichtung (26) das Temperaturerfassungselement (12) bei einer Vielzahl von Temperaturen abgleichbar ist.

2. Brennofen nach Anspruch 1, **dadurch gekennzeichnet, dass** der Temperaturfühler (28) bei einem oder zwei Temperaturpunkten eichbar ist.

3. Brennofen nach Anspruch 1 oder 2, **dadurch gekennzeichnet, dass** mindestens einer der Temperaturpunkte ein Schmelzpunkt eines im Wesentlichen reinen Materials (42) ist, das bei Erreichen seines Schmelzpunktes seinen Aggregatzustand ändert, wobei die dabei für die Dauer der Aggregatzustandsänderung konstant bleibende Temperatur des Materials für die Temperaturerfassung ausnutzbar ist.

4. Brennofen nach Anspruch 3, **dadurch gekennzeichnet, dass** das im Wesentlichen reine Material (42) ein Metall ist.

5. Brennofen nach einem der vorhergehenden Ansprüche, **dadurch gekennzeichnet, dass** der Temperaturfühler (28) mit dem Material (42) in Wärmeverbindung ist, und/oder das Material den Temperaturfühler (28) wenigstens teilweise umgibt.

6. Brennofen nach Anspruch 5, **dadurch gekennzeichnet, dass** das Material zwischen dem Temperaturfühler (28) und einem, wenigstens einen Teil des Temperaturfühlers (28) umgebenden, weiteren Material angeordnet ist.

7. Brennofen nach Anspruch 6, **dadurch gekennzeichnet, dass** sich das Material mindestens teilweise in einem geschlossenen Raum befindet, der zwischen dem Temperaturfühler (28) und dem weiteren Material ausgebildet ist.

8. Brennofen nach Anspruch 6 oder 7, **dadurch gekennzeichnet, dass** das weitere Material das Material vollständig umgibt.

9. Brennofen nach einem der Ansprüche 4 bis 8, **dadurch gekennzeichnet, dass** das weitere Material aus einer Keramikschicht gebildet ist und/oder dass der Temperaturfühler (28) Reinaluminium aufweist und/oder dass das Material Silber oder Aluminium aufweist.

10. Brennofen nach nach einem der vorhergehenden Ansprüche, **dadurch gekennzeichnet, dass** der Brennofen (10) eine Ofenhaube (14) und einen Ofensockel (22) aufweist und die etwa zentral in der Mitte angeordnete Kalibriervorrichtung (26) mit dem Temperaturfühler (28) von dort entnehmbar ist.

11. Brennofen nach Anspruch 10, **dadurch gekennzeichnet, dass** die Kalibriervorrichtung (26) mit dem Temperaturfühler (28) auf dem Temperaturerfassungselement (12) angeordnet und von dort entnehmbar ist.

12. Brennofen nach einem der vorhergehenden Ansprüche, **dadurch gekennzeichnet, dass** das Temperaturerfassungselement (12) in einer Ofenhaube (14) in deren wand- oder deckennahen Bereich oder im Bereich des Ofensockels angeordnet ist.

13. Brennofen nach einem der vorhergehenden Ansprüche, **dadurch gekennzeichnet, dass** der Temperaturfühler (28) durch die Eichung über die vorgegebene Anzahl von Temperaturpunkten einen Offset erfährt, der bis zur nächsten Eichung abspeicherbar ist.

14. Brennofen nach einem der vorhergehenden Ansprüche, **dadurch gekennzeichnet, dass** die Kalibriervorrichtung (26) für das Temperaturerfassungselement (12) zu ihrer Eichung ein vorgegebenes Temperaturprofil abgespeichert hat und dass die Kalibrierung über die Kalibriervorrichtung unter Abfahren eines DIN-Temperaturprofils, einmal mit Über- oder Unterdruck und einmal unter Umgebungs-Luft, erreichbar ist.

15. Brennofen nach einem der vorhergehenden Ansprüche, **dadurch gekennzeichnet, dass** die Kalibriervorrichtung (26) in den Brennofen (10) fest eingebaut ist, insbesondere im Bereich des Ofensockels (22).

16. Brennofen nach einem der Ansprüche 1 bis 14, **dadurch gekennzeichnet, dass** die Kalibriervorrichtung (26) steckbar an dem Brennofen (10) angebracht ist und nach dem Einstecken in den Brennraum (16) ragt.

17. Brennofen nach Anspruch 16, **dadurch gekennzeichnet, dass** die Kalibriervorrichtung (26) beweglich in oder an dem Brennofen (10) gelagert ist.

18. Brennofen nach Anspruch 17, **dadurch gekennzeichnet, dass** die Kalibriervorrichtung (26) über einen Schwanenhals gelagert ist.

19. Brennofen nach einem der vorhergehenden Ansprüche, **dadurch gekennzeichnet, dass** die Kalibriervorrichtung (26) als nachrüstbare Vorrichtung für einen Brennofen (10) ausgebildet ist.

## Claims

1. A baking furnace for material to be baked, in particular for dental materials, having a temperature detecting member (12) and a calibrating device (26) for the baking furnace, by the use of which the temperature detecting member (12) is calibratable, the calibrating device (26) having a temperature sensor (28), the calibrating device (26) including the temperature sensor (28) being arranged approximately centrally in the center, and the temperature sensor (28) in turn being calibratable at a predetermined number of at least 2 temperature points, **characterized in that**
an automatic adjustment device (30) is provided in the baking furnace (10) by the use of which the temperature detection member (12) is adjustable at a plurality of temperatures using the calibrating device (26).

2. The baking furnace according to claim 1, **characterized in that** the temperature sensor (28) is calibratable at one or two temperature points.

3. The baking furnace according to Claim 1 or 2, **characterized in that** at least one of the temperature points is a melting point of a substantially pure material (42), which changes its state of aggregation when reaching its melting point, wherein the material temperature remaining constant for the duration of changing state of aggregation can be made use of for temperature detection.

4. The baking furnace according to claim 3, **characterized in that** the substantially pure material (42) Is a metal.

5. The baking furnace according to one of the preceding claims, **characterized in that** the temperature sensor (28) is in thermal communication with the material (42) and/or the material at least partially surrounds the temperature sensor (28).

6. The baking furnace according to claim 5, **characterized in that** the material is located between the temperature sensor (28) and another material surrounding at least part of the temperature sensor (28).

7. The baking furnace according to claim 6, **characterized in that** the material is at least partially located In an enclosed space which is formed between the temperature sensor (28) and the further material.

8. The baking furnace according to claim 6 or 7, **characterized in that** said other material completely surrounds the material.

9. The baking furnace according to one of claims 4 to 8, **characterized in that** said other material is formed of a ceramic layer and/or **In that** the temperature sensor (28) comprises pure aluminum and/or **In that** the material comprises silver or aluminum.

10. The baking furnace according to one of the preceding claims, **characterized in that** the baking furnace (10) comprises a baking furnace hood (14) and a baking furnace base (22) and the calibrating device (26) including the temperature sensor (28) which are arranged approximately centrally in the center are removable therefrom.

11. The baking furnace according to Claim 10, **characterized in that** the calibrating device (26) including the temperature sensor (28) are arranged on the temperature detecting member (12) and are removable therefrom.

12. The baking furnace according to one of the preceding claims, **characterized in that** the temperature detecting member (12) is arranged in a baking furnace hood (14) In the region thereof close to the wall or ceiling or In the region of the baking furnace base.

13. The baking furnace after one of the preceding claims, **characterized in that** the temperature sensor (28) undergoes offsetting when being calibrated across the predetermined number of temperature points, which offsetting is storable until the next calibration.

14. The baking furnace according to one of the preceding claims, **characterized in that** in the calibrating device (26) for the temperature detection member (12) a predetermined temperature profile for calibration thereof is stored, and **in that** calibration is accessible through the calibrating device by scanning a DIN temperature profile, both with overpressure or underpressure and under ambient air.

15. The baking furnace according to one of the preceding claims, **characterized In that** the calibrating device (26) is constantly installed in the baking furnace (10), in particular in the region of the baking furnace base (22).

16. The baking furnace according to one of claims 1 to 14, **characterized in that** the calibrating device (26) Is pluggably attached to the baking furnace (10) and projects into the firing chamber (16) after being plugged in.

17. The baking furnace according to claim 16, **characterized in that** the calibrating device (26) is movably mounted in or on the baking furnace (10).

18. The baking furnace according to claim 17, **characterized in that** the calibrating device (26) is mounted via a gooseneck.

19. The baking furnace according to one of the preceding claims, **characterized in that** the calibrating device (26) is formed as a retrofittable device for a baking furnace (10).

## Revendications

1. Four pour produits à cuire, en particulier pour les matériaux dentaires, avec une élément de détection de la température (12) et un dispositif de calibrage (26) pour le four, avec lequel l'élément de détection de la température (12) peut être calibré, où le dispositif de calibrage (26) présente une sonde de température (28), le dispositif de calibrage (26) avec la sonde de température (28) est disposée à peu près de manière centrale par rapport au milieu et la sonde de température (28) de son côté peut être calibré à un nombre prédéterminé d'au moins 2 points de température, **caractérisé en ce qu'**un dispositif d'ajustement automatique (30) est prévu dans le four (10) avec lequel l'élément de détection de température (12) peut être ajusté par le dispositif de calibrage (26) à une pluralité de températures.

2. Four selon la revendication 1, **caractérisé en ce que** la sonde de température (28) peut être calibré à un ou deux points de température.

3. Four selon la revendication 1 ou 2, **caractérisé en ce qu'**au moins l'un des points de température est un point de fusion d'un matériau essentiellement pur (42) qui, en atteignant son point de fusion, change son état d'agrégation, où la température du matériau, qui reste constante pendant la durée du changement dans l'état global, peut être utilisée pour la détection de la température.

4. Four selon la revendication 3, **caractérisé en ce que** le matériau essentiellement pur (42) est un métal.

5. Four selon l'une des revendications précédentes, **caractérisé en ce que** la sonde de température (28) est en connexion thermique avec le matériau (42), et/ou le matériau entoure la sonde de température (28) au moins partiellement.

6. Four selon la revendication 5, **caractérisé en ce que** le matériau est disposé entre la sonde de température (28) et un autre matériau, qui entoure au moins une partie de la sonde de température (28).

7. Four selon la revendication 6, **caractérisé en ce que** le matériel se trouve au moins partiellement dans un espace fermé qui est formé entre la sonde de température (28) et l'autre matériau.

8. Four selon la revendication 6 ou 7, **caractérisé en ce que** l'autre matériau entoure complètement le matériau.

9. Four selon l'une des revendications 4 à 8, **caractérisé en ce que** l'autre matériau est formé à partir d'une couche de céramique et/ou que la sonde de température (28) présente de l'aluminium pur et/ou que le matériau présente de l'argent ou de l'aluminium.

10. Four selon l'une des revendications précédentes, **caractérisé en ce que** le four (10) est muni d'une hotte de four (14) et d'un socle de four (22) et le dispositif de calibrage (26) disposé à peu près de manière centrale par rapport au milieu avec la sonde de température (28) peut être enlevé à partir de là.

11. Four selon la revendication 10, **caractérisé en ce que** le dispositif de calibrage (26) est disposé avec la sonde de température (28) sur l'élément de détection de température (12) et peut être enlevé à partir de là.

12. Four selon l'une des revendications précédentes, **caractérisé en ce que** l'élément de détection de température (12) est disposé dans une hotte de four (14) dans la zone près de sa paroi ou son plafond ou dans la zone du socle du four.

13. Four selon l'une des revendications précédentes, **caractérisé en ce que** la sonde de température (28) subit un décalage par le calibrage sur le nombre prédéterminé de points de température, qui peut être mémorisé jusqu'au calibrage suivant.

14. Four selon l'une des revendications précédentes, **caractérisé en ce que** le dispositif de calibrage (26) a mémorisé un profil de température prédéterminé pour le calibrage de l'élément de détection de température (12) et que le calibrage peut être atteint par le dispositif de calibrage en parcourant un profil DIN de températures, une fois dans des conditions de surpression ou de dépression et une fois dans des conditions d'air ambiant.

15. Four selon l'une des revendications précédentes, **caractérisé en ce que** le dispositif de calibrage (26) est installé en permanence dans le four (10), en particulier dans la zone du socle du four (22).

16. Four selon l'une des revendications 1 à 14, **caractérisé en ce que** le dispositif de calibrage (26) est attaché au four (10) de manière enfichable et après son enfichage pénètre dans la chambre de combustion (16).

17. Four selon la revendication 16, **caractérisé en ce que** le dispositif de calibrage (26) est logé de manière mobile dans ou sur le four (10).

18. Four selon la revendication 17, **caractérisé en ce que** le dispositif de calibrage (26) est stocké par un col de cygne.

19. Four selon l'une des revendications précédentes, **caractérisé en ce que** le dispositif de calibrage (26) est conçu comme dispositif pour l'installation ultérieure sur un four (10).
